Europäisches Patentamt

(19) European Patent Office

Office européen des brevets

(11) Numéro de publication : **0 256 934 B1**

(12) **FASCICULE DE BREVET EUROPEEN**

(45) Date de publication du fascicule du brevet :
27.02.91 Bulletin 91/09

(51) Int. Cl.⁵ : **G21C 7/20**

(21) Numéro de dépôt : 87401828.6

(22) Date de dépôt : 06.08.87

(54) **Barre absorbante à dispositif d'amortissement intégré.**

(30) Priorité : 13.08.86 FR 8611697

(43) Date de publication de la demande :
24.02.88 Bulletin 88/08

(45) Mention de la délivrance du brevet :
27.02.91 Bulletin 91/09

(84) Etats contractants désignés :
BE CH DE ES GB IT LI NL

(56) Documents cités :
EP-A- 0 159 509
DE-A- 2 406 595
DE-B- 1 232 281
US-A- 4 057 129

(73) Titulaire : **FRAMATOME**
**Tour Fiat 1, Place de la Coupole**
**F-92400 Courbevoie (FR)**

(72) Inventeur : **Savary, Fernand**
**14 Rue Prince de Condé**
**F-95320 St Leu La Foret (FR)**

(74) Mandataire : **Fort, Jacques et al**
**CABINET PLASSERAUD 84, rue d'Amsterdam**
**F-75009 Paris (FR)**

Jouve, 18, rue Saint-Denis, 75001 PARIS

## Description

L'invention concerne les barres absorbantes pour réacteur nucléaire refroidi par un liquide, du type comprenant une grappe de crayons absorbants parallèles fixés à des bras d'une araignée ayant un pommeau central raccordable à un mécanisme de déplacement vertical et un dispositif d'amortissement intégré au pommeau. Elle trouve une application particulièrement importante, bien que non exclusive, dans les réacteurs refroidis et modérés par de l'eau sous pression.

On utilise des barres absorbantes du type défini ci-dessus, dont les crayons absorbants contiennent un poison neutronique, pour commander la réactivité dans le coeur du réacteur, en insérant plus ou moins les crayons. Pour provoquer un arrêt d'urgence du réacteur, toutes les barres de commande sont simultanément insérées dans le coeur en les libérant de façon qu'elles s'enfoncent sous l'action de leur propre poids. Pour amortir le choc qu'elles subissent lors de la venue en butée du pommeau contre la plaque supérieure de coeur du réacteur ou contre l'embout supérieur de l'assemblage combustible avec lequel elles sont associées, on a déjà proposé de prévoir un amortisseur de choc. Le document EP-A-159 509 décrit une barre de commande munie d'un dispositif d'amortissement ayant un cylindre ménagé dans le pommeau et dans lequel coulisse un piston repoussé dans une position de saillie vers le bas par des moyens élastiques contenus dans le cylindre. A partir du moment où le piston arrive en butée contre la plaque supérieure de coeur, le mouvement vers le bas est freiné par la compression des moyens élastiques et par la perte de charge subie par le liquide qui s'échappe du cylindre entre la paroi de ce dernier et le piston. Un tel dispositif d'amortissement n'a cependant qu'un effet limité. En particulier, l'effet d'amortissement apporté par la perte de charge ne change pratiquement pas au cours de l'enfoncement du piston et seule la raideur variable du ressort assure la progressivité. Par ailleurs, le dispositif intégré dans le pommeau contrarie la circulation de liquide et le refroidissement.

Ces inconvénients pouvaient encore être acceptés dans le cas de barres absorbantes dont les crayons contiennent un poison neutronique sous une forme relativement cohérente et n'exigent pas un refroidissement important. Il n'en est plus de même dans le cas de barres absorbantes contenant d'autres composés, et notamment dans le cas des barres dont les crayons contiennent un matériau destiné à provoquer une variation du spectre d'énergie des neutrons dans le coeur. Ce matériau est souvent constitué par des pastilles de matériau fertile (oxyde d'uranium appauvri et/ou de thorium par exemple) qui supportent difficilement des chocs brutaux.

L'invention vise à fournir une barre absorbante comportant un dispositif d'amortissement réduisant notablement les chocs en cas de chute de barre et permettant, dans toutes les conditions de fonctionnement, un refroidissement satisfaisant, notamment des crayons.

On se souviendra à ce sujet que, contrairement aux crayons contenant un poison ayant une simple absorption parasite, les crayons contenant un matériau fertile doivent être refroidis par circulation de liquide réfrigérant.

Dans ce but, l'invention propose notamment une barre ci-dessus définie conforme à la revendication 1 destiné à réduire la vitesse d'impact du piston.

L'invention sera mieux comprise à la lecture de la description qui suit d'un mode particulier d'exécution, donné à titre d'exemple non limitatif. La description se réfère aux dessins qui l'accompagnent, dans lesquels :

   – la Figure 1 montre le pommeau d'une barre suivant l'invention, en coupe suivant un plan vertical passant par son axe ;

   – les Figures 2A à 2E sont des schémas montrant les trois phases successives de fonctionnement de l'amortisseur intégré au pommeau montré en Figure 1.

La barre absorbante qui sera maintenant décrite est utilisable dans les réacteurs à eau sous pression en service à l'heure actuelle ainsi que dans les réacteurs à variation de spectre actuellement envisagés. Elle est par exemple utilisable en combinaison avec un assemblage combustible du genre montré dans le document EP-A-159 509 déjà mentionné ou dans un ensemble du genre décrit dans le document FR-A-84 19917.

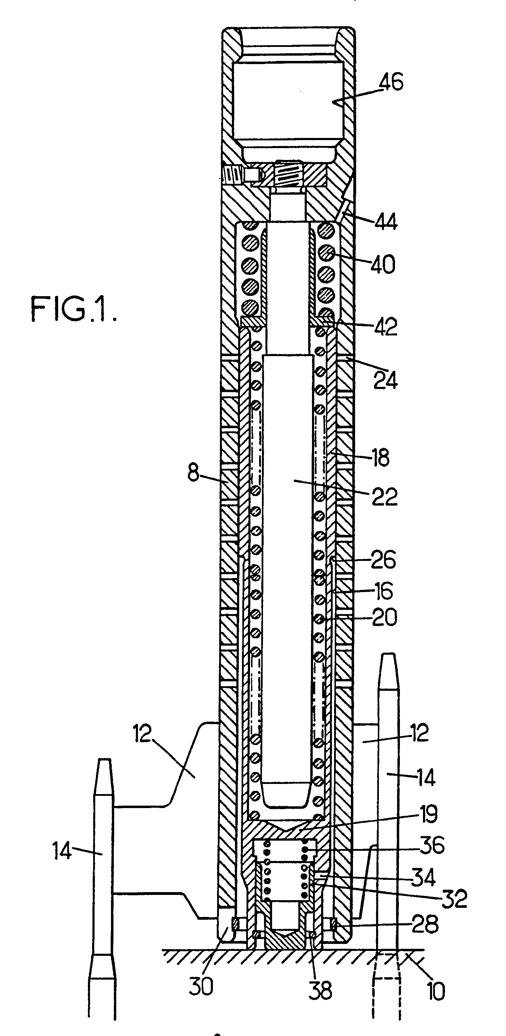

La Figure 1 montre la position relative du pommeau 8 d'une barre absorbante et des organes qu'elle contient, alors que cette barre est séparée de sa tige de commande et repose sur une surface d'appui 10 que l'on supposera être la plaque supérieure de coeur d'un réacteur mais qui pourrait être l'embout supérieur d'un assemblage combustible. Le pommeau 8 constitue, avec des ailettes radiales 12 qu'il porte, un assemblage couramment dénommé "araignée". Les bras 12, constitués par des ailettes verticales minces, portent des crayons 14 qui, dans la position où le pommeau est représenté, sont complètement engagés dans des tubes guides appartenant à un assemblage de combustible ou plusieurs.

Le dispositif d'amortissement incorporé dans le pommeau 8 peut être considéré comme comportant trois parties, un frein hydraulique, un amortisseur ou "dashpot" d'atténuation de choc et un ressort d'amortissement de fin de course.

Le frein hydraulique comporte un cylindre fermé à sa partie supérieure, ménagé dans le manchon. Dans l'alésage 16 de ce cylindre coulisse de façon sensiblement étanche un piston creux 18. Ce piston présente une paroi transversale 19 d'appui de moyens élastiques de rappel et d'amortissement 20. Ces moyens élastiques sont constitués de deux ressorts hélicoïdaux placés en série, ayant des sens d'enroulement opposés pour éviter des effets de rotation. Ces deux ressorts 20 sont guidés par une tige centrale 22 fixée au fond du cylindre.

La paroi du cylindre est percée de trous 24 de laminage de l'eau chassée du cylindre par l'enfoncement du piston 18. Ces trous sont répartis le long du cylindre. Ils sont disposés par jeux, par exemple de deux trous, à chaque niveau pour équilibrer les poussées hydrodynamiques dues aux jets qui s'échappent lors de l'enfoncement du piston. Le nombre de jeux sera choisi en fonction de la progressivité recherchée et en tenant compte de la différence des conditions à froid et à chaud. Dans la pratique, seize jeux seront généralement suffisants.

Le piston 18 présente avantageusement un épaulement 26 à un niveau tel que le jeu annulaire qui existe au-dessous de l'épaulement communique avec les jeux inférieurs de trous 24 lorsque la barre est complètement insérée dans le coeur (Figure 1), ce qui autorise une circulation d'eau de refroidissement.

La course du piston 18 vers le bas est limitée par un anneau de butée 28 logé dans une gorge interne du cylindre. Dans le mode de réalisation montré en Figure 1, le pommeau présente à sa partie inférieure une encoche 30 facilitant l'accès à l'anneau de butée et permettant par exemple de le bloquer en position par une soudure.

L'amortisseur de choc a pour but d'atténuer le choc du piston 18 lors de la chute de la barre. Cet amortisseur comprend un plongeur 32 coulissant dans un alésage borgne prévu dans le piston au-dessous de la cloison 19. Un ressort de ré-armement 36, pouvant être de faible raideur, tend à amener le plongeur 32 en appui contre une bague de butée 38. Un trou -ou des trous- 34 ménagé dans la paroi du piston oppose une perte de charge calibrée à l'échappement du liquide refoulé par le plongeur 32 lors de l'impact. Un seul trou a été représenté sur la Figure 1 mais en général on prévoira plusieurs trous avec des dimensions de répartition telles que la vitesse d'impact du piston 18, lorsque le plongueur 32 est complètement effacé, soit aussi faible que possible.

Enfin, un ressort de fin de course 40 est placé entre le fond du cylindre et une coupelle d'appui 42, sur laquelle reposent également les moyens élastiques 20. Cette coupelle présente des dimensions telles que le piston 18 vient s'appuyer sur elle en fin de course du frein hydraulique. Le ressort 40, par sa compression, absorbe alors l'énergie cinétique résiduelle après freinage hydraulique. Un ou plusieurs trous 44 peuvent être prévus dans le cylindre pour permettre l'échappement du liquide lors du mouvement de levée de la coupelle 42.

Lorsque le pommeau est en appui, dans la position montrée en Figure 1, le plongeur 32 est complètement effacé dans le piston. Celui-reste légèrement en saillie, retenu par l'effort de compression exercé par le ressort de fin de course 40.

Le fonctionnement du dispositif est le suivant, en cas de lâcher de la barre avec sa tige de commande munie d'une pince désarmable, non représentée, dont les doigts s'engagent dans un chambrage supérieur 46 du pommeau.

Aussi longtemps que la barre est suspendue à sa tige de commande, le plongeur 32 est maintenu en appui contre la bague 38 par son ressort d'armement 36. L'épaulement 26 du piston est maintenu en appui contre l'anneau de butée 28 par les ressorts 20. Ces derniers doivent présenter une force de précompression telle que le piston reste en appui sur l'anneau 28 en dépit des forces d'inertie générées par la commande pas-à-pas du mécanisme d'entraînement des barres, qui provoquent fréquemment des accélérations atteignant 15 g. Il suffira généralement que les ressorts 20 aient une précompression au repos d'environ 20 daN, à condition de veiller à réduire le poids du piston 18. Enfin, le ressort de fin de course 40 est complètement détendu.

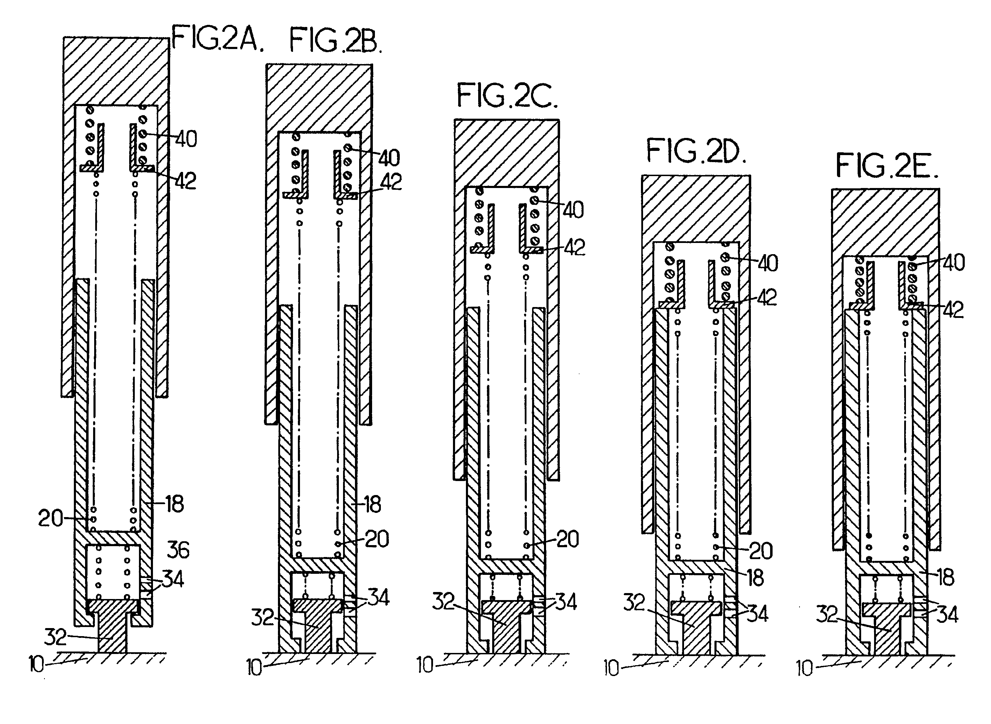

La première phase du fonctionnement met en oeuvre uniquement l'amortisseur de choc du dashpot : à partir de l'entrée en contact du plongeur 32 avec la plaque 10 (Figure 2A), celui-ci commence à s'enfoncer en refoulant du liquide par les trous 34. A la fin de cette première phase (Figure 2B), le piston 18 vient en contact avec la plaque 10.

Au cours de la seconde phase, le piston 18 s'enfonce en comprimant les ressorts 20 et en refoulant l'eau qui occupe le cylindre par les trous 24 (non représentés sur les Figures 2) qui opposent une perte de charge croissante avec le déplacement du piston (Figure 2C).

La fin de la seconde phase de fonctionnement correspond au début de l'intervention du ressort de fin de course 40, lorsque le piston 18 vient en butée contre la coupelle 42 (Figure 2D). La poursuite de l'enfoncement du piston 18 provoque la compression du ressort 40 jusqu'à amortissement complet (Figure 2E).

Il faut noter que les trous 24 peuvent être placés tous au-dessus des bras 12, ce qui permet de percer les trous après fixation des bras.

**Revendications**

1. Barre absorbante pour réacteur nucléaire refroidi par un liquide, comprenant une grappe de crayons absorbants (14) parallèles fixés à des bras (12) d'une araignée ayant un pommeau central (8) raccordable à un mécanisme de déplacement vertical et un dispositif d'amortissement intégré au pommeau, ayant un cylindre dans lequel coulisse un piston (18) repoussé dans une position prédéterminée de saillie vers le bas par des moyens élastiques (20) contenus dans le cylindre, **caractérisée en ce** que le cylindre et le piston (18) sont réalisés de façon que la section de fuite offerte au liquide chassé du cylindre par le piston diminue au fur et à mesure de l'enfoncement de ce dernier à partir de ladite position en saillie, le piston (18) présentant un épaulement (26) dirigé vers le bas de façon à délimiter un jeu annulaire, **et en ce que** le piston porte un amortisseur hydromécanique (32, 34, 36) d'impact lors de la chute de la barre.

2. Barre selon la revendication 1, caractérisée en ce que ladite section de fuite est constituée par des jeux étagés de trous (24) calibrés ménagés dans la paroi du cylindre et successivement recouverts par le piston lors de son enfoncement.

3. Barre selon la revendication 2, caractérisée en ce que le jeu annulaire s'ouvre par lesdits jeux de trous.

4. Barre selon la revendication 1, 2 ou 3, caractérisée en ce que l'amortisseur hydromécanique présente un ressort d'armement de faible raideur comparé à celle des moyens élastiques (20).

5. Barre selon l'une quelconque des revendications précédentes, caractérisée en ce que les moyens élastiques (20) comprennent deux ressorts hélicoïdaux placés en série et ayant des sens d'enroulement opposés.

6. Barre selon l'une quelconque des revendications précédentes, caractérisée en ce qu'elle comprend de plus un ressort (40) de fin de course, interposé entre le fond du cylindre et une coupelle (42) d'appui du piston lorsque ce dernier a parcouru une course prédéterminée de saillie vers le bas.

7. Barre selon la revendication 6, caractérisée en ce que la venue en butée du piston sur la coupelle intervient lorsque le piston a dépassé tous les trous fournissant la section de fuite.

## Claims

1. Absorbing bar for a liquid cooled nuclear reactor, including a cluster of parallel absorbing rods (14) fixed to arms (12) of a spider having a central pommel (8) connectable to a vertical drive mechanism and a damping device incorporated in the pommel, having a cylinder slidably receiving a piston (18) urged downwardly toward a predetermined projecting position by resilient means (20) contained in the cylinder, characterized in that the cylinder and the piston (18) are so constructed that the leak cross-sectional flow area offered to liquid forced out of the cylinder by the piston decreases as the latter is moved from said projecting position, the piston (18) having a downwardly directed shoulder (26) for defining an annular clearance and in that the piston carries a hydro-mechanical damper (32, 34, 36) for exerting a shock damping action upon fall of the bar.

2. Bar according to claim 1, characterized in that said leak cross-sectional flow area is defined by distributed sets of calibrated openings (24) formed in the wall of the cylinder and successively covered by the piston during movement thereof into the cylinder.

3. Bar according to claim 2, characterized in that the annular clearance opens through said sets of openings.

4. Bar according to claim 1, 2 or 3, characterized in that the hydro-mechanical damper has a reset spring of low stiffness as compared with that of the resilient means (20).

5. Bar according to any one of the preceding claims, characterized in that the resilient means (20) comprise two helical springs placed in series relation and having opposite winding directions.

6. Bar according to any one of the preceding claims, characterized in that it further comprises an end-of-travel spring (40) interposed between the bottom wall of the cylinder and a cup (42) receiving the piston when the latter has travelled over a predetermined projecting length downwardly.

7. Bar according to claim 6, characterized in that abutment of the piston on the cup takes place after the piston has moved beyond all the openings providing the leak cross-sectional area.

## Ansprüche

1. Absorberstab für flüssiggekühlte Kernreaktoren mit einem Bündel paralleler Absorberstäbe (14), die an den Armen (12) einer Spinne befestigt sind, mit einem zentralen Kopf (8), der an einem Mechanismus zur vertikalen Verschiebung befestigbar ist und einer in den Kopf integrierten Stoßdämpfervorrichtung mit einem Zylinder, in dem ein Kolben (18) gleitet, der über in dem Zylinder enthaltene elastische Organe (20) in eine nach unten vorstehende vorbestimmte Position gedrückt wird, **dadurch gekennzeichnet,** daß der Zylinder und der Kolben (18) so ausgebildet sind, daß der Durchlaßquerschnitt für die durch den Kolben aus dem Zylinder verdrängte Flüssigkeit mit steigendem Eindringen des Kolbens ausgehend von der vorstehenden Stellung sich verringert, wobei der Kolben (18) eine nach unten gerichtete Schulter (26) aufweist, um ein Ringspiel zu begrenzen und dadurch, daß der Kolben einen hydromechanischen Dämpfer zur Aufnahme des Schocks während des Falls des Stabes aufweist.

2. Absorberstab nach Anspruch 1, dadurch gekennzeichnet, daß der Durchlaßquerschnitt aus abgestuften Gruppen kalibrierter Löcher (24) besteht, die in die Zylinderwand gebohrt sind und aufeinanderfolgend von dem Kolben während dessen Eindringen abgedeckt werden.

3. Absorberstab nach Anspruch 2, dadurch gekennzeichnet, daß das ringförmige Spiel sich zu den Lochgruppen hin öffnet.

4. Absorberstab nach Anspruch 1, 2 oder 3, dadurch gekennzeichnet, daß der hydromechanische Dämpfer eine Verstärkungsfeder mit geringer Steifigkeit verglichen mit der der elastischen Organe (20) aufweist.

5. Absorberstab nach einem der vorstehenden Ansprüche, **dadurch gekennzeichnet**, daß die elastischen Organe (20) zwei Spiralfedern aufweisen, die hintereinander mit entgegengesetzter Wickelrichtung angeordnet sind.

6. Absorberstab nach einem der vorstehenden Ansprüche, gekennzeichnet durch eine Hubendfeder (40), die angeordnet ist zwischen dem Zylinderboden und einer Schüssel (42), die zur Auflage des Kolbens dient, wenn dieser eine vorbestimmte nach unten ausführende Bewegung durchgeführt hat.

7. Absorberstab nach Anspruch 6, dadurch gekennzeichnet, daß die Anlage des Kolbens auf der Schüssel erfolgt, wenn der Kolben sich an allen Löchern vorbeibewegt hat, die den Durchlaßquerschnitt bilden.

FIG.1.

FIG.2A.  FIG.2B.

FIG.2C.

FIG.2D.

FIG.2E.

EP 0 256 934 B1